(19) **Europäisches Patentamt**
**European Patent Office**
**Office européen des brevets**

(11) **EP 3 438 171 B1**

(12) **EUROPEAN PATENT SPECIFICATION**

(45) Date of publication and mention
of the grant of the patent:
**19.08.2020 Bulletin 2020/34**

(51) Int Cl.:
***C08J 9/16*** *(2006.01)*     ***B29C 44/00*** *(2006.01)*
***C08K 3/04*** *(2006.01)*     ***C08L 23/10*** *(2006.01)*

(21) Application number: **17773808.5**

(22) Date of filing: **17.02.2017**

(86) International application number:
**PCT/JP2017/005849**

(87) International publication number:
**WO 2017/169260 (05.10.2017 Gazette 2017/40)**

(54) **POLYPROPYLENE RESIN FOAMABLE PARTICLES, POLYPROPYLENE RESIN IN-MOLD FOAM MOLDED BODY, AND PRODUCTION METHOD THEREFOR**

SCHÄUMBARE PARTIKEL AUS POLYPROPYLENHARZ, SCHAUMFORMKÖRPER AUS POLYPROPYLENHARZ UND HERSTELLUNGSVERFAHREN DAFÜR

PARTICULES EXPANSIBLES DE RÉSINE DE POLYPROPYLÈNE, CORPS MOULÉ EN MOUSSE DANS LE MOULE DE RÉSINE DE POLYPROPYLÈNE, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2016 JP 2016072733**

(43) Date of publication of application:
**06.02.2019 Bulletin 2019/06**

(73) Proprietor: **Kaneka Corporation**
**Osaka-shi, Osaka 530-8288 (JP)**

(72) Inventor: **ITOI Akihiro**
**Settsu-shi, Osaka 566-072 (JP)**

(74) Representative: **Vossius & Partner**
**Patentanwälte Rechtsanwälte mbB**
**Siebertstrasse 3**
**81675 München (DE)**

(56) References cited:
**WO-A1-02/32985**     **JP-A- H0 386 737**
**JP-A- S5 849 730**     **JP-A- 2005 146 122**
**JP-A- 2010 077 359**     **JP-A- 2013 538 892**

**Description**

Technical Field

The present invention relates to polypropylene-based resin expanded particles, a polypropylene-based resin in-mold foam molded article, a method for producing the polypropylene-based resin expanded particles, and a method for producing the polypropylene-based resin in-mold foam molded article.

Background Art

Polypropylene-based resin expanded particles are formed into an in-mold foam molded article when they are filled into a mold and heated by steam. The in-mold foam molded article thus obtained has the advantages of arbitrary shape, lightweight, heat insulating properties, etc. Comparing with similar in-mold foam molded articles using synthetic resin expanded particles, the above in-mold foam molded article is superior to an in-mold foam molded article formed of polystyrene-based resin expanded particles in chemical resistance, heat resistance, and a distortion restoration rate after compression. Moreover, the above in-mold foam molded article is superior to an in-mold foam molded article formed of polyethylene-based resin expanded particles in dimensional accuracy, heat resistance, and compressive strength. Because of these characteristics, the in-mold foam molded article formed of the polypropylene-based resin expanded particles has been used for various purposes, including a heat insulating material, a cushioning packaging material, an automotive interior material, and an automotive bumper core. In recent years, the in-mold foam molded article formed of the polypropylene-based resin expanded particles has found a wider range of applications, and a variety of products have also been developed. Under such circumstances, the in-mold foam molded article may be required to have a quality that has never seen before. Above all, the appearance of the in-mold foam molded article becomes more and more important when it is used in a location that would attract the attention of users. Since the demand for a higher quality is growing every year, the appearance of the in-mold foam molded article needs to be much better than the conventional one. In particular, there may be a gap between the expanded particles (also referred to as an "interparticle gap" in the following) on the surface of the in-mold foam molded article due to the production method. If many interparticle gaps are present, the appearance of the in-mold foam molded article is impaired, resulting in poor aesthetic quality of the surface of the in-mold foam molded article. Therefore, it is desirable that the number of interparticle gaps is as small as possible in the in-mold foam molded article whose appearance is important.

On the other hand, the in-mold foam molded article can be in any form, and thus may be required to have a complex shape. Depending on the shape of the in-mold foam molded article, the filling properties of the expanded particles are likely to be reduced because some part of the mold may not be filled with the expanded particles. This can increase particularly the number of interparticle gaps in the production of the in-mold foam molded article.

As described in Patent Documents 1 to 2, the technological development has progressed to improve the aesthetic quality of the surface of the in-mold foam molded article. In order to produce an in-mold foam molded article with an aesthetically pleasing surface even if the air pressure in the expanded particles is 0.18 MPa or less during in-mold foam molding, Patent Document 1 discloses polypropylene-based resin expanded particles containing a polypropylene-based resin and a polyolefin oligomer as a base resin. Patent Document 2 discloses expanded particles containing a polypropylene-based resin and a terpene-based resin or a petroleum resin as a base resin.

Patent Document 3 discloses a technology of polyolefin-based expanded particles containing a polypropylene-based resin and waxes. Patent Documents 4 and 5 disclose a resin composition containing a polyolefin-based resin and a polyolefin wax to disperse a functional material and a carbon nanotube.

Patent Document 6 discloses a polypropylene-based wax with a low melting point. Patent document 7 relates to foamed blends of propylene-based polymers.

Prior Art Documents

Patent Documents

Patent Document 1: JP 2009-84547 A
Patent Document 2: JP 2005-8850 A
Patent Document 3: JP H3(1991)-86737 A
Patent Document 4: JP 2008-88340 A
Patent Document 5: JP 2013-209494 A
Patent Document 6: JP H3(1991)-197516A

Patent Document 7: WO 02/32985 A1

Disclosure of Invention

Problem to be Solved by the Invention

However, it has been revealed that the technology of Patent Document 1 may have an insufficient effect or an adverse effect for in-mold foam molding if the filling properties are poor. The technology of Patent Document 2 has an insufficient effect for in-mold foam molding if the filling properties are poor. Patent Document 3 discloses the dimensional accuracy and fusion properties of the in-mold foam molded article, but fails to teach that the type and amount of wax should be adjusted to improve the aesthetic quality of the surface of the in-mold foam molded article. Patent Documents 4 and 5 disclose nothing about the in-mold foam moldability of the polypropylene-based resin expanded particles and the aesthetic quality of the surface of the in-mold foam molded article. Patent Document 3 only refers to a polypropylene wax and a polyethylene wax, which would have been commonly used at that time. As described in Patent Document 6, a polypropylene-based wax with a low melting point is being produced, e.g., due to the development of a catalyst.

To solve the above conventional problems, the present invention provides polypropylene-based resin expanded particles that can be formed into an in-mold foam molded article having an aesthetically pleasing surface with a reduced number of interparticle gaps even if the filling properties are poor during in-mold foam molding, a polypropylene-based resin in-mold foam molded article, a method for producing the polypropylene-based resin expanded particles, and a method for producing the polypropylene-based resin in-mold foam molded article.

Means for Solving Problem

The present inventors conducted intensive studies to solve the above problems and found that an in-mold foam molded article having an aesthetically pleasing surface with a reduced number of interparticle gaps was obtained from polypropylene-based resin expanded particles including polypropylene-based resin particles that contained a polypropylene-based resin mixture as a base resin. The polypropylene-based resin mixture was obtained by mixing a polypropylene-based resin (A) with a melting point of 130°C or more and 155°C or less and a polypropylene-based wax (B) with a melting point of 100°C or less at a predetermined ratio. Consequently, the present invention was completed.

The present invention includes the following aspects.

[1] Polypropylene-based resin expanded particles including polypropylene-based resin particles that contain a polypropylene-based resin mixture as a base resin, wherein the polypropylene-based resin mixture consists of 92.0 parts by weight or more and 98.5 parts by weight or less of a polypropylene-based resin with a melting point of 130°C or more and 155°C or less and 1.5 parts by weight or more and 8.0 parts by weight or less of a polypropylene-based wax with a melting point of 100°C or less when a weight of the polypropylene-based resin mixture is 100 parts by weight, and the polypropylene-based wax is a copolymer of propylene and $\alpha$-olefin other than propylene.

[2] The polypropylene-based resin expanded particles according to [1], wherein the polypropylene-based wax is obtained by polymerization using a metallocene catalyst.

[3] The polypropylene-based resin expanded particles according to [1] or [2], wherein the polypropylene-based resin particles contain 0.01 parts by weight or more and 10 parts by weight or less of a hydrophilic compound with respect to 100 parts by weight of the polypropylene-based resin mixture.

[4] The polypropylene-based resin expanded particles according to any one of [1] to [3], wherein the polypropylene-based resin particles contain a colorant, and a content of the colorant is 0.01 parts by weight or more and 15 parts by weight or less with respect to 100 parts by weight of the polypropylene-based resin mixture.

[5] The polypropylene-based resin expanded particles according to any one of [1] to [4], wherein the polypropylene-based resin particles contain a colorant, and the colorant is carbon black.

[6] The polypropylene-based resin expanded particles according to any one of [1] to [5], wherein the polypropylene-based resin particles contain a colorant, the colorant is carbon black, and a content of the carbon black is 0.1 parts by weight or more and 10 parts by weight or less with respect to 100 parts by weight of the polypropylene-based resin mixture.

[7] A polypropylene-based resin in-mold foam molded article including the polypropylene-based resin expanded particles according to any one of [1] to [6].

[8] A method for producing the polypropylene-based resin expanded particles according to any one of [1] to [6], the method including a first-step expansion process to produce polypropylene-based resin expanded particles, the first-step expansion process including: dispersing polypropylene-based resin particles, an expanding agent, and an aqueous dispersing medium in a sealed container; heating an aqueous dispersion thus prepared to a temperature not less than a softening temperature of the polypropylene-based resin particles and applying pressure to the aqueous dispersion; and then releasing the aqueous dispersion in the sealed container to a pressure region where pressure is lower than internal pressure of the sealed container.

[9] The method according to [8], wherein the expanding agent is inorganic gas and/or water.

[10] The method according to [9], wherein the inorganic gas is carbon dioxide.

[11] A method for producing a polypropylene-based resin in-mold foam molded article, the method including: filling the polypropylene-based resin expanded particles according to any one of [1] to [6] into a molding space that is defined by two molds and can be closed but not hermetically sealed, after applying pressure not less than atmospheric pressure to an inside of the polypropylene-based resin expanded particles; and heating the polypropylene-based resin expanded particles by a heating medium to form a polypropylene-based resin in-mold foam molded article.

Effects of the Invention

The polypropylene-based resin expanded particles of the present invention can be formed into a polypropylene-based resin in-mold foam molded article having an aesthetically pleasing surface with a reduced number of interparticle gaps even if the filling properties are poor during in-mold foam molding. The method for producing the polypropylene-based resin expanded particles of the present invention is able to produce polypropylene-based resin expanded particles that can be formed into an in-mold foam molded article having an aesthetically pleasing surface with a reduced number of interparticle gaps even if the filling properties are poor during in-mold foam molding. The polypropylene-based resin in-mold foam molded article of the present invention can have an aesthetically pleasing surface with a reduced number of interparticle gaps. The method for producing the polypropylene-based resin in-mold foam molded article of the present invention is able to produce a polypropylene-based resin in-mold foam molded article having an aesthetically pleasing surface with a reduced number of interparticle gaps.

Brief Description of Drawing

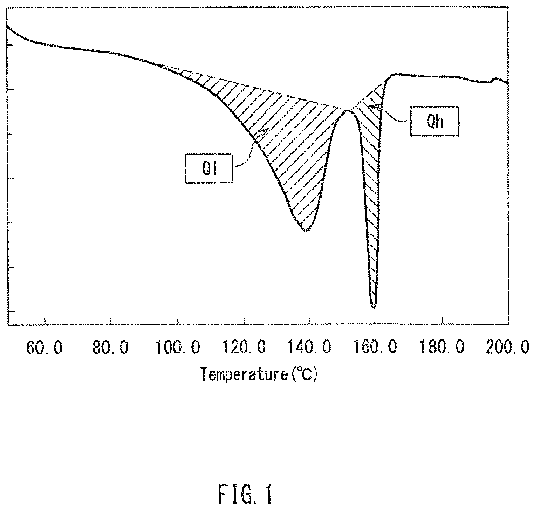

[FIG. 1] FIG. 1 shows an example of a DSC curve that is obtained when the temperature of polypropylene-based resin expanded particles of an embodiment of the present invention is increased from 40°C to 220°C at a rate of 10°C/min by using a differential scanning calorimeter (DSC). In FIG. 1, the DSC curve has a melting peak on the low temperature side and a melting peak on the high temperature side; Ql represents a heat quantity of the melting peak on the low temperature side, i.e., a heat quantity that is indicated by the area enclosed by the melting peak on the low temperature side of the DSC curve and a tangent line that extends from the maximum point between the low-temperature peak and the high-temperature peak to the base line indicating the start of melting; and Qh represents a heat quantity of the melting peak on the high temperature side, i.e., a heat quantity that is indicated by the area enclosed by the melting peak on the high temperature side of the DSC curve and a tangent line that extends from the maximum point between the low-temperature peak and the high-temperature peak to the base line indicating the end of melting.

Description of the Invention

The polypropylene-based resin expanded particles of the present invention include polypropylene-based resin particles that contain a polypropylene-based resin mixture as a base resin. In other words, the polypropylene-based resin expanded particles are obtained by expanding the polypropylene-based resin particles that contain the polypropylene-based resin mixture as the base resin. The polypropylene-based resin mixture consists of 92.0 parts by weight or more and 98.5 parts by weight or less of a polypropylene-based resin (A) with a melting point of 130°C or more and 155°C or less and 1.5 parts by weight or more and 8.0 parts by weigh or less of a polypropylene-based wax (B) with a melting point of 100°C or less when the weight of the polypropylene-based resin mixture is 100 parts by weight.

The melting point of the polypropylene-based resin (A) used in the present invention is not particularly limited and may be 130°C to 155°C, preferably 140°C to 155°C, and more preferably 143°C to 151°C. When the melting point of the polypropylene-based resin (A) falls in the above range, an in-mold foam molded article with a better balance between dimensional performance, mechanical strength, and an aesthetic quality of the surface is likely to be produced.

In an embodiment of the present invention, the melting point is a peak temperature of an endothermic peak on a DSC curve that is obtained when the temperature of 1 mg to 10 mg of a sample of the resin or wax is increased from 20°C to 220°C at a rate of 10°C/min, then reduced from 220°C to 20°C at a rate of 10°C/min, and again increased from 20°C to 220°C at a rate of 10°C/min by using a differential scanning calorimeter (DSC).

A melt flow rate (which may be referred to as "MFR" in the following) of the polypropylene-based resin (A) used in the present invention is preferably 4.0 g/10 mm to 10 g/10 min, and more preferably 5.0 g/10 min to 9 g/10 min. When the melt flow rate of the polypropylene-based resin (A) falls in the above range, an in-mold foam molded article that is less susceptible to deformation and has an aesthetically pleasing surface is likely to be produced.

In an embodiment of the present invention, the MFR is a value measured with an MFR measuring instrument according to JIS K 7210 under the condition that the orifice diameter is 2.0959 $\pm$ 0.005 mm, the orifice length is 8.000 $\pm$ 0.025 mm, the load is 2160 g, and the temperature is 230 $\pm$ 0.2°C.

In an embodiment of the present invention, the composition of the polypropylene-based resin (A) is not particularly limited as long as the melting point is 130°C to 155°C. For example, the polypropylene-based resin (A) may be composed of a propylene homopolymer or copolymers of propylene and other olefins. The copolymers of propylene and other olefins may include, e.g., an olefin-propylene random copolymer and an olefin-propylene block copolymer. In particular, the olefin-propylene random copolymer is preferred. In an embodiment of the present invention, the polypropylene-based resin (A) preferably contains 50% by weight or more of a propylene (monomer) component. In other words, when the total weight of all monomer components used in the polymerization of the polypropylene-based resin is taken as 100% by weight, the content of the propylene (monomer) component is preferably 50% by weight or more. The content of the propylene (monomer) component in the polypropylene-based resin (A) is not particularly limited. For example, from the viewpoint of dimensional performance and mechanical strength, the content of the propylene (monomer) component is preferably 60% by weight or more, more preferably 70% by weight or more, and further preferably 80% by weight or more.

In the polypropylene-based resin (A) used in the present invention, olefins copolymerizable with propylene are not particularly limited and may be, e.g., olefins with a carbon number of 2 or with a carbon number of 4 or more. Examples of the olefins with a carbon number of 2 or with a carbon number of 4 or more include $\alpha$-olefins with a carbon number of 2 or with a carbon number of 4 to 12 such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. These olefins with a carbon number of 2 or with a carbon number of 4 or more may be used individually or in combinations of two or more. Among them, from the viewpoint of, e.g., ease of availability, economic efficiency, and foamability during in-mold foam molding, ethylene or $\alpha$-olefins with a carbon number of 4 or more are preferred, and ethylene or 1-butene are more preferred.

The polypropylene-based resin (A) used in the present invention can be obtained by using catalysts such as a Ziegler catalyst, a metallocene catalyst, and a post-metallocene catalyst. The use of the Ziegler catalyst is likely to provide a polymer having a large weight average molecular weight (Mw) / number average molecular weight (Mn) ratio.

When the polypropylene-based resin (A) is oxidatively decomposed with an organic peroxide, the properties such as a molecular weight and a melt flow rate of the polypropylene-based resin (A) can be adjusted. For example, the oxidative decomposition can be performed so that the polypropylene-based resin to which the organic peroxide has been added is heated and melted in an extruder.

A weight average molecular weight (Mw) of the polypropylene-based resin (A) used in the present invention is preferably 100000 to 800000. The polypropylene-based resin (A) having a weight average molecular weight in the above range can be suitably used for polyolefin-based resin expanded particles.

The polypropylene-based wax (B) used in the present invention is a copolymer of propylene and $\alpha$-olefin other than propylene and is not particularly limited as long as the melting point is 100°C or less. The polypropylene-based wax (B) may be either a random copolymer of propylene and $\alpha$-olefin other than propylene or a block copolymer of propylene and $\alpha$-olefin other than propylene. In an embodiment of the present invention, the polypropylene-based wax (B) is not particularly limited and preferably contains, e.g., 50% by weight to 97% by weight of a propylene (monomer) component.

In the polypropylene-based wax (B) used in the present invention, $\alpha$-olefins copolymerizable with propylene may be, e.g., $\alpha$-olefins with a carbon number of 2 or with a carbon number of 4 or more. Examples of the $\alpha$-olefins with a carbon number of 2 or with a carbon number of 4 or more include $\alpha$-olefins with a carbon number of 2 or with a carbon number of 4 to 12 such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene. These olefins with a carbon number of 2 or with a carbon number of 4 or more may be used individually or in combinations of two or more. Among them, from the viewpoint of, e.g., ease of availability, economic efficiency, and foamability during in-mold foam molding, ethylene or $\alpha$-olefins with a carbon number of 4 or more are preferred, and ethylene or 1-butene are more preferred.

The melting point of the polypropylene-based wax (B) used in the present invention is 100°C or less, and preferably 80°C or less. If the melting point of the polypropylene-based wax (B) is more than 100°C, the effect of improving the aesthetic quality of the surface of an in-mold foam molded article cannot be obtained when the filling properties are poor during in-mold foam molding. Moreover, it is desirable that the polypropylene-based wax (B) is a solid at a temperature of 40°C or less. Thus, the melting point of the polypropylene-based wax (B) is preferably more than 40°C, i.e., preferably 41°C or more. If the polypropylene-based wax (B) is turned into a liquid at a temperature of 40°C or less, special equipment may be required for measurement or addition of the wax in a melt kneading process, and bleeding may tend to occur and cause the surface of an in-mold foam molded article to become sticky.

A melt viscosity (170°C) of the polypropylene-based wax (B) used in the present invention is preferably 50 mPa·s to 10000 mPa·s, more preferably 100 mPa·s to 7000 mPa·s, and further preferably 100 mPa·s to 3000 mPa·s. When the melt viscosity falls in the above range, the wax may have good kneadability with the resin, and an in-mold foam molded article having an aesthetically pleasing surface is likely to be produced.

A weight average molecular weight (Mw) of the polypropylene-based wax (B) used in the present invention is preferably 2000 to 40000. When the weight average molecular weight falls in the above range, better results are likely to be achieved in the production of expanded particles and the formation of an in-mold foam molded article. The polypropylene-based wax (B) may be obtained, e.g., by polymerization using a metallocene catalyst or by decomposition (such as thermal decomposition) of the polypropylene-based resin. In particular, the polypropylene-based wax obtained by polymerization using a metallocene catalyst is preferred because the molecular weight and the melting point (i.e., the amount of comonomer) are easily adjusted, and thus the polypropylene-based wax can have properties required for the present application.

In an embodiment of the present invention, the polypropylene-based resin mixture, which is the base resin of the polypropylene-based resin particles, consists of 92.0 parts by weight to 98.5 parts by weight of the polypropylene-based resin (A) and 1.5 parts by weight to 8.0 parts by weight of the polypropylene-based wax (B) when the weight of the polypropylene-based resin mixture is 100 parts by weight. Preferably, the polypropylene-based resin (A) may be 92.0 parts by weight to 97.5 parts by weight and the polypropylene-based wax (B) may be 2.5 parts by weight to 8.0 parts by weight. If the polypropylene-based wax (B) is less than 1.5 parts by weight, it is difficult to obtain the effect of improving the aesthetic quality of the surface of an in-mold foam molded article to be produced. If the polypropylene-based wax (B) is more than 8.0 parts by weight, an in-mold foam molded article tends to be deformed because the rigidity is reduced.

The polypropylene-based resin particles may contain, e.g., a cell nucleating agent, a hydrophilic compound, an antioxidant, an antistatic agent, a colorant, and a flame retardant as needed, in addition to the polypropylene-based resin mixture as the base resin. In this case, a masterbatch may be previously prepared by mixing a high concentration of these additives with another resin, and this masterbatch resin may be added to the polypropylene-based resin mixture. The resin used in the masterbatch is preferably a polyolefin-based resin, more preferably a polypropylene-based resin, and further preferably a polypropylene-based resin that is the same as the polypropylene-based resin (A) and/or the polypropylene-based wax (B) contained in the base resin of the polypropylene-based resin expanded particles.

It is preferable that the polypropylene-based resin particles contain a hydrophilic compound. When the polypropylene-based resin particles contain a hydrophilic compound, polypropylene-based resin expanded particles with a high expansion ratio are likely to be produced even if inorganic gas is used as an expanding agent.

Examples of the hydrophilic compound used in the present invention include compounds containing hydrophilic groups such as a carboxyl group, a hydroxyl group, an amino group, a sulfo group, and a polyoxyethylene group in the molecules, derivatives of these compounds, and a hydrophilic polymer. Specifically, the compounds containing a carboxyl group may include, e.g., lauric acid and sodium laurate. The compounds containing a hydroxyl group may include, e.g., ethylene glycol and glycerin. Other hydrophilic organic compounds may include, e.g., organic compounds having a triazine ring such as melamine (chemical name: 1,3,5-triazine-2,4,6-triamine), isocyanuric acid, and an isocyanuric acid condensation product. These hydrophilic compounds may be used individually or in combinations of two or more.

In an embodiment of the present invention, the hydrophilic polymer means a polymer with a water absorption of 0.5% by weight or more, which is measured in accordance with ASTM D570. The hydrophilic polymer includes a so-called hygroscopic polymer, a water absorptive polymer, and a water-soluble polymer. The water absorptive polymer is insoluble in water, can absorb several times to several hundred times its own weight in water, and will not easily dehydrated even under pressure. The water-soluble polymer is soluble in water, e.g., at 15°C or more.

Specific examples of the hydrophilic polymer include the following: ionomer resins obtained by, e.g., neutralizing the carboxylic acid groups of an ethylene-acrylic acid-maleic anhydride terpolymer or an ethylene-(meth)acrylic acid copolymer so that the molecules are cross-linked to each other with alkali metal ions such as sodium ions and potassium ions or transition metal ions such as zinc ions; carboxyl group containing polymers such as an ethylene-(meth)acrylic acid copolymer; polyamides such as nylon 6, nylon 6,6, and copolymer nylon; nonionic water absorptive polymers such as polyethylene glycol and polypropylene glycol; polyether-polyolefin resin block copolymers as typified by, e.g., PELESTAT (trade name, manufactured by Sanyo Chemical Industries, Ltd.); and cross-linked polyethylene oxide copolymers as typified by, e.g., AQUACALK (trade name, manufactured by Sumitomo Seika Chemicals Co., Ltd.). These hydrophilic polymers may be used individually or in combinations of two or more. Among the above hydrophilic polymers, the nonionic water absorptive polymers and the polyether-polyolefin resin block copolymers are preferred because they have relatively good dispersion stability in a pressure vessel and can exhibit the water absorption properties with a relatively small amount of addition.

Preferred examples of the hydrophilic compound include glycerin, polyethylene glycol, polypropylene glycol, and melamine. This is because an in-mold foam molded article having an aesthetically pleasing surface is likely to be produced.

The content of the hydrophilic compound in the polypropylene-based resin particles is preferably 0.01 parts by weight to 10 parts by weight, more preferably 0.03 parts by weight to 5 parts by weight, and further preferably 0.05 parts by weight to 1 part by weight with respect to 100 parts by weight of the polypropylene-based resin mixture as the base resin. When the content of the hydrophilic compound is 0.01 parts by weight or more, expanded particles with a high expansion ratio are likely to be produced. When the content of the hydrophilic compound is 10 parts by weight or less, the expansion ratio is increased, and an in-mold foam molded article to be produced is likely to have an aesthetically pleasing surface and good mechanical properties.

Examples of the cell nucleating agent used in the present invention include inorganic nucleating agents such as talc, calcium stearate, calcium carbonate, silica, kaolin, titanium oxide, bentonite, and barium sulfate. These cell nucleating agents may be used individually or in combinations of two or more. Among the above cell nucleating agents, talc is preferred because uniform cells can be obtained. The content of the cell nucleating agent in the polypropylene-based resin particles may be appropriately adjusted in accordance with the intended cell diameter and the type of the nucleating agent. The content of the cell nucleating agent is preferably 0.001 parts by weight to 2 parts by weight, and more preferably 0.01 parts by weight to 1 part by weight with respect to 100 parts by weight of the polypropylene-based resin mixture as the base resin. When the content of the cell nucleating agent falls in the above range, cells are likely to be uniform and to have a size suitable for expanded particles.

Examples of the colorant include carbon black, ultramarine blue, a cyanine pigment, an azo pigment, a quinacridone pigment, cadmium yellow, chromium oxide, iron oxide, a perylene pigment, and an anthraquinone pigment. The content of the colorant in the polypropylene-based resin particles is not limited and may be adjusted in accordance with the coloring power of the colorant and the intended color. The content of the colorant is preferably 0.01 parts by weight to 15 parts by weight, and more preferably 0.1 parts by weight to 10 parts by weight with respect to 100 parts by weight of the polypropylene-based resin mixture as the base resin. When the content of the colorant falls in the above range, good tone of color is likely to be obtained without any impairment of the in-mold foam moldability of expanded particles.

Among the above colorants, carbon black, i.e., a black pigment is preferred in terms of color and colorability, and is often used when the appearance is regarded as important. The content of the carbon black in the polypropylene-based resin particles is preferably 0.1 parts by weight to 10 parts by weight, and more preferably 1 part by weight to 8 parts by weight with respect to 100 parts by weight of the polypropylene-based resin mixture as the base resin. When the content of the carbon black falls in the above range, the colorability becomes better, and a decrease in resin viscosity is suppressed, so that an in-mold foam molded article with good quality is likely to be produced.

The weight per particle of the polypropylene-based resin particles used in the present invention is preferably 0.2 mg to 10 mg, and more preferably 0.5 mg to 6.0 mg. When the weight per particle of the polypropylene-based resin particles is 0.2 mg or more, the shrinkage ratio of an in-mold foam molded article to be produced is not increased. When the weight per particle of the polypropylene-based resin particles is 10 mg or less, the particles are easily filled into a mold.

In an embodiment of the present invention, the weight per particle of the polypropylene-based resin particles is the average weight of the resin particles, which is calculated based on the weight of 100 polypropylene-based resin particles that are randomly selected.

In general, the composition, particle weight, etc. of the polypropylene-based resin particles remain almost unchanged after the particles have been subjected to the expansion process and the in-mold foam molding process. Therefore, the expanded particles have the same properties (e.g., the composition and the particle weight) as the polypropylene-based resin particles. Moreover, even if the in-mold foam molded article is remelted, the resulting particles have the same properties (e.g., the composition and the particle weight) as the polypropylene-based resin particles. Thus, the weight per particle of the polypropylene-based resin expanded particles is preferably 0.2 mg to 10 mg, and more preferably 0.5 mg to 6.0 mg.

To produce the polypropylene-based resin expanded particles of the present invention, first, the polypropylene-based resin particles are produced. For example, the following methods may be used to produce the polypropylene-based resin particles.

First, the polypropylene-based resin (A) and the polypropylene-based wax (B), and optionally other additives, are mixed by a mixing method such as a dry blending method or a masterbatch method.

Next, the resin composition thus obtained is melted and kneaded by, e.g., an extruder, a kneader, a Banbury mixer (registered trademark), or a roller, which is then cut into particles with a cutter or a pelletizer, thereby providing polypropylene-based resin particles.

Using the polypropylene-based resin particles obtained in this manner, the polypropylene-based resin expanded particles of the present invention can be produced.

A preferred aspect of a method for producing the polypropylene-based resin expanded particles of the present invention may include, e.g., a first-step expansion process to produce polypropylene-based resin expanded particles in an aqueous dispersion system. The first-step expansion process may be performed in the following manner. First, the polypropylene-based resin particles and an expanding agent are dispersed in an aqueous dispersing medium in a sealed container. This aqueous dispersion is heated to a temperature not less than a softening temperature of the polypropylene-based resin particles, and pressure is applied to the aqueous dispersion. Then, the aqueous dispersion containing the polypropylene-based resin particles that have been impregnated with the expanding agent is released to a pressure region where the pressure (generally atmospheric pressure) is lower than the internal pressure of the sealed container.

Specifically, e.g., the polypropylene-based resin particles and the aqueous dispersing medium, and optionally a dispersing agent or the like, are placed in the sealed container, and then the sealed container is vacuumized as needed. Subsequently, the expanding agent is introduced to the sealed container. Thereafter, the aqueous dispersion is heated to a temperature not less than the softening temperature of the polypropylene-based resin (A). The amount of the expanding agent added is adjusted so that the pressure in the sealed container is raised to about 1.5 MPa (gage pressure) or more and 5 MPa (gage pressure) or less by heating. After heating, if necessary, the expanding agent is further added to adjust the pressure in the sealed container to desired expanding pressure. Moreover, the temperature in the sealed container is maintained for more than 0 minutes and 120 minutes or less while the temperature is finely adjusted to a desired expanding temperature. Next, the aqueous dispersion containing the polypropylene-based resin particles that have been impregnated with the expanding agent (i.e., the content of the sealed container) is released to the pressure region where the pressure (generally atmospheric pressure) is lower than the internal pressure of the sealed container. Thus, the polypropylene-based resin expanded particles are produced. The expanding pressure is not particularly limited and is preferably, e.g., 1.5 MPa (gage pressure) to 5 MPa (gage pressure). In an embodiment of the present invention, the temperature "not less than the softening temperature of the polypropylene-based resin (A)" means a temperature not less than (the melting point of the polypropylene-based resin (A) - 10°C). The expanding temperature is not particularly limited and may be a temperature not less than the softening temperature of the polypropylene-based resin (A). For example, the expanding temperature is preferably in the range of (the melting point of the polypropylene-based resin (A) - 10°C) to (the melting point of the polypropylene-based resin (A) + 10°C).

In order to adjust the expansion ratio, the ambient temperature during the release of the aqueous dispersion may be adjusted in the range of room temperature to about 110°C. It is desirable that the ambient temperature is increased to about 100°C by, e.g., steam particularly to produce expanded particles with a high expansion ratio.

In the present invention, the expanding agent may be introduced by any method other than the above. For example, the polypropylene-based resin particles and the aqueous dispersing medium, and optionally a dispersing agent or the like, are placed in the sealed container, and then the sealed container is vacuumized as need. Subsequently, the expanding agent may be introduced to the sealed container while the aqueous dispersion is heated to a temperature not less than the softening temperature of the polypropylene-based resin.

In another method for introducing the expanding agent, the polypropylene-based resin particles and the aqueous dispersing medium, and optionally a dispersing agent or the like, are placed in the sealed container, and then heated to near the expanding temperature, at which the expanding agent may be introduced.

The expansion ratio and average cell diameter of the polypropylene-based resin expanded particles may be adjusted in the following manner. For example, carbon dioxide, nitrogen, air, or a material used as the expanding agent is injected into the sealed container before the aqueous dispersion is released to a low pressure region. This raises the internal pressure of the sealed container and adjusts the pressure release rate for expansion. Moreover, when carbon dioxide, nitrogen, air, or a material used as the expanding agent is injected into the sealed container not only before but also during the release of the aqueous dispersion to the low pressure region, the pressure in the sealed container is controlled so that the expansion ratio and the average cell diameter can be adjusted.

The expansion ratio and the average cell diameter can also be adjusted by appropriately changing the temperature (approximately the expanding temperature) in the sealed container before the release of the aqueous dispersion to the low pressure region.

The expansion ratio of the polypropylene-based resin expanded particles tends to be high, e.g., as the internal pressure of the sealed container becomes higher, as the pressure release rate becomes faster, or as the temperature in the sealed container before the release of the aqueous dispersion becomes higher. Moreover, the average cell diameter of the polypropylene-based resin expanded particles tends to be small, e.g., as the internal pressure of the sealed container becomes higher, or as the pressure release rate becomes faster.

Examples of the expanding agent used in the present invention include the following: saturated hydrocarbons such as propane, butane, and pentane; ethers such as dimethyl ether; alcohols such as methanol and ethanol; inorganic gas such as air, nitrogen, and carbon dioxide; and water. These expanding agents may be used individually or in combinations of two or more.

Among the above expanding agents, the inorganic gas such as carbon dioxide, nitrogen, and air and/or water are preferred particularly because the environmental load is small and there is no danger of burning. Further, carbon dioxide and/or water are more preferred because the expanded particles can have a relatively high expansion ratio.

The sealed container used in the present invention is not particularly limited as long as it can withstand the internal pressure and temperature of the container during the production of the expanded particles. For example, an autoclave-type pressure vessel may be used.

The aqueous dispersing medium used in the present invention is preferably only water. A dispersing medium obtained by adding, e.g., methanol, ethanol, ethylene glycol, or glycerin to water can also be used. When the polypropylene-based resin particles contain a hydrophilic compound, water in the aqueous dispersing medium also serves as an expanding agent and contributes to an increase in the expansion ratio.

In the method for producing the polypropylene-based expanded particles of an embodiment of the present invention, it is preferable that a dispersing agent is added to the aqueous dispersing medium to prevent coalescence of the polypropylene-based resin particles.

Examples of the dispersing agent used in the present invention include inorganic dispersing agents such as tricalcium phosphate, trimagnesium phosphate, basic magnesium carbonate, calcium carbonate, barium sulfate, kaolin, talc, and clay. These dispersing agents may be used individually or in combinations of two or more.

In the method for producing the polypropylene-based expanded particles of an embodiment of the present invention, it is preferable that a dispersing aid is used with the dispersing agent.

Examples of the dispersing aid used in the present invention include the following: carboxylate-type anionic surfactants such as N-acyl amino acid salt, alkyl ether carboxylate, and acylated peptide; sulfonate-type anionic surfactants such as alkyl sulfonate, n-paraffin sulfonate, alkyl benzene sulfonate, alkyl naphthalene sulfonate, and sulfosuccinate; sulfate-type anionic surfactants such as sulfonated oil, alkyl sulfate, alkyl ether sulfate, alkyl amide sulfate, and alkyl allyl ether sulfate; and phosphate-type anionic surfactants such as alkyl phosphate and polyoxyethylene phosphate. Moreover, examples of the dispersing aid also include polycarboxylic acid-type high molecular surfactants such as maleic acid copolymer salt and polyacrylate, and polyvalent anionic high molecular surfactants such as polystyrene sulfonate and naphthalenesulfonic acid formalin condensate. These dispersing aids may be used individually or in combinations of two or more. In particular, it is preferable that at least one dispersing agent selected from the group consisting of tricalcium phosphate, trimagnesium phosphate, barium sulfate, and kaolin is used in combination with at least one dispersing aid selected from the group consisting of sodium n-paraffin sulfonate and alkyl benzene sulfonate.

The amounts of the dispersing agent and the dispersing aid used in the present invention vary depending on their types and the type and amount of the polypropylene-based resin particles to be used. In general, it is preferable that 0.1 parts by weight to 3 parts by weight of the dispersing agent is added to 100 parts by weight of the aqueous dispersing medium, and it is more preferable that 0.001 parts by weight to 0.1 parts by weight of the dispersing aid is added to 100 parts by weight of the aqueous dispersing medium.

It is preferable that 20 parts by weight to 100 parts by weight of the polypropylene-based resin particles are generally added to 100 parts by weight of the aqueous dispersing medium to improve the dispersibility in the aqueous dispersing medium.

In addition to the above method for producing the polypropylene-based resin expanded particles in the aqueous dispersion system, there is another method without using the aqueous dispersing medium. For example, an expanding agent is brought into direct contact with the polypropylene-based resin particles in the sealed container. As a result, the polypropylene-based resin particles are impregnated with the expanding agent to form expandable polypropylene-based resin particles. Then, the expandable polypropylene-based resin particles are expanded, e.g., by contact with steam, so that the polypropylene-based resin expanded particles can be produced.

In an embodiment of the present invention, the above expansion process of obtaining the polypropylene-based resin expanded particles from the polypropylene-based resin particles may be referred to as a "first-step expansion process." The polypropylene-based resin expanded particles obtained in this manner may be referred to as "first-step expanded particles."

Moreover, the first-step expanded particles are impregnated with inorganic gas (air, nitrogen, carbon dioxide, etc.) to apply internal pressure, and then brought into contact with steam at predetermined pressure. Consequently, the expansion ratio of the polypropylene-based resin expanded particles can be increased compared to that of the first-step expanded particles. As described above, when the polypropylene-based resin expanded particles are further expanded to produce polypropylene-based resin expanded particles with a higher expansion ratio, this expansion process may be referred to as a "second-step expansion process." The polypropylene-based resin expanded particles obtained after the second-step expansion process may be referred to as "second-step expanded particles."

In an embodiment of the present invention, the "second-step expansion process" specifically includes impregnating the first-step expanded particles with inorganic gas (air, nitrogen, carbon dioxide, etc.) to apply internal pressure, and then bringing the first-step expanded particles into contact with steam at predetermined pressure, thereby providing the second-step expanded particles with a higher expansion ratio than the first-step expanded particles.

In an embodiment of the present invention, it is desirable that the internal pressure of the inorganic gas with which the first-step expanded particles are impregnated is appropriately changed in view of, e.g., the expansion ratio of the second-step expanded particles. The internal pressure of the inorganic gas is preferably 0.12 MPa (absolute pressure) to 0.6 MPa (absolute pressure).

In an embodiment of the present invention, the pressure of the steam in the second-step expansion process is adjusted preferably in the range of 0.02 MPa (gage pressure) to 0.25 MPa (gage pressure), and more preferably in the range of 0.03 MPa (gate pressure) to 0.15 MPa (gage pressure) in view of the expansion ratio of the second-step expanded particles.

A closed cell ratio of the polypropylene-based resin expanded particles of the present invention is preferably 88% or more, and more preferably 93% or more. When the closed cell ratio of the polypropylene-based resin expanded particles is 88% or more, internal gas does not easily flow out of the expanded particles during in-mold foam molding, and thus deformation of the molded article is reduced.

In an embodiment of the present invention, the closed cell ratio is determined in the following manner. First, the volume of the closed cells of the polypropylene-based resin expanded particles is measured with an air comparison pycnometer. The apparent volume of the polypropylene-based resin expanded particles is determined separately by an ethanol immersion method. Then, the closed cell ratio is calculated by dividing the closed cell volume by the apparent volume.

In an embodiment of the present invention, it is preferable that the polypropylene-based resin expanded particles have two melting peaks on the DSC curve that is obtained when the temperature of 5 mg to 6 mg of the polypropylene-based resin expanded particles is increased from 40°C to 220°C at a rate of 10°C/min by using a differential scanning calorimeter.

In an embodiment of the present invention, the DSC ratio of the polypropylene-based resin expanded particles is preferably 10% to 50%, and more preferably 15% to 30%. When the DSC ratio falls in the above range, a polypropylene-based resin in-mold foam molded article having an aesthetically pleasing surface is likely to be produced.

In an embodiment of the present invention, the DSC ratio is determined in the following manner. As shown in FIG. 1, Ql represents a heat quantity of the melting peak on the low temperature side, i.e., a heat quantity that is indicated by the area enclosed by the melting peak on the low temperature side of the DSC curve and a tangent line that extends from the maximum point between the low-temperature peak and the high-temperature peak to the base line indicating the start of melting, and Qh represents a heat quantity of the melting peak on the high temperature side, i.e., a heat quantity that is indicated by the area enclosed by the melting peak on the high temperature side of the DSC curve and a tangent line that extends from the maximum point between the low-temperature peak and the high-temperature peak to the base line indicating the end of melting. The DSC ratio is a ratio of the melting peak on the high temperature side and is calculated by $[Qh / (Ql + Qh) \times 100]$ based on the heat quantities Ql and Qh.

The DSC ratio varies depending on the expanding temperature and the expanding pressure in the production of the polypropylene-based resin expanded particles. Therefore, expanded particles with an intended DSC ratio can be produced by appropriately adjusting the expanding temperature and the expanding pressure. In general, the DSC ratio tends to decrease with an increase in the expanding temperature and the expanding pressure, and also depends on the type of the polypropylene-based resin, the additives, and the type of the expanding agent. Specifically, the DSC ratio generally decreases by about 5% to 20% with a 1°C rise in the expanding temperature. The DSC ratio decreases by about 0.5% to 5% with a 0.1 MPa rise in the expanding pressure.

In the present invention, the expansion ratio of the polypropylene-based resin expanded particles is not particularly limited and may be appropriately adjusted as needed. In an embodiment of the present invention, the expansion ratio of the polypropylene-based resin expanded particles is preferably 3 times to 40 times, and more preferably 3 times to 25 times.

In an embodiment of the present invention, the expansion ratio of the polypropylene-based resin expanded particles is determined in the following manner. A weight w (g) of the polypropylene-based resin expanded particles is measured. Then, the polypropylene-based resin expanded particles are immersed in ethanol contained in a graduated cylinder, and a volume v ($cm^3$) of the polypropylene-based resin expanded particles is measured based on an increase in water level of the graduated cylinder (water immersion method). Subsequently, a true specific gravity of the polypropylene-based resin expanded particles is calculated by pb = w/v. The expansion ratio is a ratio (pr /pb) of the density pr of the polypropylene-based resin particles before expansion to the true specific gravity pb of the polypropylene-based resin expanded particles.

In an embodiment of the present invention, the average cell diameter of the polypropylene-based resin expanded particles is preferably 100 μm to 500 μm, and more preferably 120 μm to 400 μm. When the average cell diameter is 100 μm or more, the shrinkage of a polypropylene-based resin in-mold foam molded article to be produced is likely to be small. When the average cell diameter is 500 μm or less, the molding cycle in the in-mold foam molding process is likely to be short.

In an embodiment of the present invention, the average cell diameter is measured in the following manner. Using a microscope, the cut surfaces of the expanded particles are observed. In these microscopic images, a straight line is drawn that passes through substantially the center of each of the expanded particles. Then, the number of cells n through which the straight line penetrates, and the expanded particle diameter L (μm) that is defined by intersection points of the straight line and the surface of an expanded particle are read from the microscopic images, and the resulting values are substituted into the following formula (1).

$$\text{Average cell diameter (μm)} = L / n \qquad (1)$$

In an embodiment of the present invention, a method for producing a polypropylene-based resin in-mold foam molded article includes the following: filling the polypropylene-based resin expanded particles of the present invention into a mold that can be closed but not hermetically sealed; heating the polypropylene-based resin expanded particles by, e.g., steam so that the expanded particles are fused to one another and molded into the same shape as the mold; cooling the molded article with a coolant such as water; and removing the molded article from the mold.

The polypropylene-based resin expanded particles are filled into the mold that is opened to the extent that the expanded particles do not spill out of the mold (the amount by which the mold is opened may be called a cracking amount). The mold is completely closed after it is filled with the expanded particles. The expanded particles are compressed and then heated. In this manner, the filling properties of the expanded particles are improved, and the molded article is likely to have an aesthetically pleasing surface without an interparticle gap. However, if the thickness of a mold for an in-mold foam molded article is not uniform, the filling properties of the expanded particles may be reduced rather than enhanced in a thick portion (such as a vertical wall) of the mold in which the thickness is large in the opening/closing direction of the mold, whereas the filling properties of the expanded particles are improved in a thin portion of the mold in which the thickness is small in the opening/closing direction of the mold, since the expanded particles are easily compressed. Therefore, the present invention can be effective for the mold with a non-uniform thickness. Moreover, if a mold cannot remain open for structural reasons when the expanded particles are filled into the mold, the filling properties are not enhanced. Therefore, the present invention can also be effective for such a mold.

The polypropylene-based resin expanded particles of the present invention are subjected to in-mold foam molding after pressure not less than atmospheric pressure has been applied to the inside of the expanded particles. This may result in a polypropylene-based resin in-mold foam molded article that has an aesthetically pleasing surface without an interparticle gap and is less susceptible to deformation. The method for applying pressure not less than atmospheric pressure to the inside of the expanded particles is not particularly limited. For example, pressure can be applied to the inside of the expanded particles by conventionally known methods such as an internal pressure application method and a compression filling method.

In the internal pressure application method, the polypropylene-based resin expanded particles have previously been held under the pressure of inorganic gas so that internal pressure not less than atmospheric pressure is applied to the expanded particles. The expanded particles to which the internal pressure has been applied are then filled into a molding space of a mold or the like that can be closed but not hermetically sealed. The internal pressure is preferably 0.12 MPa (absolute pressure) to 0.40 MPa (absolute pressure), and more preferably 0.14 MPa (absolute pressure) to 0.30 MPa (absolute pressure). When the internal pressure of the polypropylene-based resin expanded particles falls in the above range, an in-mold foam molded article with an aesthetically pleasing appearance is likely to be produced.

Examples of the inorganic gas used for the internal pressure application include air, nitrogen, helium, neon, argon, and carbon dioxide. These gases may be used individually or in combinations of two or more. Among them, air and/or nitrogen are preferred because of their versatility.

In the compression filling method, the polypropylene-based resin expanded particles are compressed in a pressure tank with a pressurized gas to preferably a bulk density of 1.25 times to 3 times the bulk density of the expanded particles before packing, more preferably a bulk density of 1.5 times to 2.2 times the bulk density of the expanded particles before packing. The compressed expanded particles are then filled into a molding space of a mold or the like that can be closed but not hermetically sealed. When the compression ratio falls in the above range, an in-mold foam molded article with an aesthetically pleasing appearance is likely to be produced.

Examples of the pressurized gas used for the compression include air, nitrogen, helium, neon, argon, and carbon dioxide. These gases may be used individually or in combinations of two or more. Among them, air and/or nitrogen are preferred because of their versatility.

After the polypropylene-based resin expanded particles are filled into the mold or the like by the above method, the expanded particles are molded using, e.g., steam as a heating medium at vapor pressure of about 0.15 MPa (G) to 0.4 MPa (G) for a heating time of about 3 seconds to 50 seconds. Thus, the polypropylene-based resin expanded particles are fused together. Subsequently, the mold is water-cooled and then opened, providing a polypropylene-based resin in-mold foam molded article. When steam is used for heating, it is preferable that the pressure is raised to intended vapor pressure for a period of about 5 seconds to 30 seconds.

Examples

Next, the polypropylene-based resin expanded particles and the production method thereof will be described in detail by way of examples and comparative examples. However, the present invention is not limited to the following examples.

In the examples and the comparative examples, the following materials were used without any particular treatment such as purification.

(I) Polypropylene-based resin (commercial products or specimens available from resin manufacturers)

(1) Polypropylene-based resin A-1: ethylene-propylene random copolymer [MFR = 7.5 g / 10 min, melting point: 146.1°C]
(2) Polypropylene-based resin A-2: ethylene-propylene random copolymer [MFR = 7.0 g / 10 min, melting point: 150.6°C]
(3) Polypropylene-based resin A-3: ethylene-butene-propylene random copolymer [MFR = 7.2 g / 10 min, melting point: 136.6°C]

(II) Polypropylene-based wax

(1) Polypropylene-based wax B-1: Licocene PP 1302 [manufactured by Clariant, ethylene-propylene random copolymer, polymerization with metallocene catalyst, melting point: 78.4°C, melt viscosity: 200 mPa·s (170°C)]
(2) Polypropylene-based wax B-2: Licocene PP 1602 [manufactured by Clariant, ethylene-propylene random copolymer, polymerization with metallocene catalyst, melting point: 72.6°C, melt viscosity: 6000 mPa·s (170°C)]
(3) Polypropylene-based wax B-3: Licocene PP 3602 [manufactured by Clariant, ethylene-propylene random copolymer, polymerization with metallocene catalyst, melting point: 101.6°C, melt viscosity: 9300 mPa·s (170°C)]
(4) Polypropylene-based wax B-4: Licocene PP 6102 [manufactured by Clariant, ethylene-propylene random copolymer, polymerization with metallocene catalyst, melting point: 141.7°C, melt viscosity: 60 mPa·s (170°C)]

All the above polypropylene-based waxes were solids in an environment of 40°C. Each of the melting points of the polypropylene-based resins and the polypropylene-based waxes was a peak temperature of the endothermic peak on the DSC curve that was obtained when the temperature of 5 mg to 6 mg of a sample was increased from 20°C to 220°C at a rate of 10°C/min, then reduced from 220°C to 20°C at a rate of 10°C/min, and again increased from 20°C to 220°C at a rate of 10°C/min by using a differential scanning calorimeter [DSC6200, manufactured by Seiko Instruments Inc.].

(III) Other additives

(1) Polyethylene glycol [manufactured by Lion Corporation, average molecular weight: 300]
(2) Glycerin [PURIFIED GLYCERIN D, manufactured by Lion Corporation]
(3) Talc [Talcan Pawder PK-S, manufactured by HAYASHI KASEI CO., LTD.]
(4) Carbon black [MCF88, manufactured by Mitsubishi Chemical Corporation]

Evaluation methods used in the examples and the comparative examples will be described below.

< Measurement of average cell diameter of expanded particles >

The polypropylene-based resin expanded particles were cut through the center of each particle with a double-edged razor [double-edged blade of high stainless steel, manufactured by FEATHER Safety Razor Co., Ltd.]. Using an optical microscope [VHX-100, manufactured by KEYENCE CORPORATION.], the cut surfaces of the expanded particles were observed at a magnification of 50X. In these microscopic images, a straight line was drawn that passed through substantially the center of each of the expanded particles. Then, the number of cells n through which the straight line penetrated, and the expanded particle diameter L ($\mu$m) that was defined by intersection points of the straight line and the surface of an expanded particle were read from the microscopic images, and the resulting values were substituted into the following formula.

$$\text{Average cell diameter (}\mu\text{m)} = L / n$$

The average cell diameter was calculated for 10 polypropylene-based resin expanded particles and the average value was obtained.

< DSC ratio of expanded particles >

Using a differential scanning calorimeter [DSC6200, manufactured by Seiko Instruments Inc.], the temperature of 5 mg to 6 mg of the polypropylene-based resin expanded particles was increased from 40°C to 220°C at a rate of 10°C/min, so that a DSC curve (see FIG. 1) was obtained. The DSC curve had two melting peaks, and the DSC ratio was calculated by the following formula:

$$DSC\ ratio = Qh\,/\,(Ql + Qh) \times 100$$

where Ql represents the heat quantity of the melting peak on the low temperature side and Qh represents the heat quantity of the melting peak on the high temperature side.

< Interparticle gap of in-mold foam molded article >

The surface of the in-mold foam molded article thus obtained was visually observed and evaluated on a 1-to-5 scale (5 representing the smallest number of interparticle gap).

1: The expanded particles were hardly expanded, and the gap between the particles was not appropriate at all.
2: There were many interparticle gaps larger than 2 mm$^2$, and these interparticle gaps were noticeable.
3: Interparticle gaps of about 1 mm$^2$ to 2 mm$^2$ were generated.
4: A small number of interparticle gaps of about 1 mm$^2$ were present, but most of them were not noticeable.
5: Almost no interparticle gap was found.

< Deformation of in-mold foam molded article >

The in-mold foam molded article thus obtained was visually observed and evaluated based on the following criteria.
Better: The molded article was hardly deformed, and no wrinkles were formed on the surface of the molded article.
Slightly better: The molded article was slightly deformed, and small wrinkles were formed on the surface of the molded article.
Worse: The molded article was greatly deformed, and many wrinkles were formed on the surface of the molded article.

(Example 1)

[Production of polypropylene-based resin particles]

First, 97 parts by weight of the polypropylene-based resin (A-1) and 3 parts by weigh of the polypropylene-based wax (B-1) were mixed to form a polypropylene-based resin mixture. Then, 100 parts by weight of the polypropylene-based resin mixture was dry blended with 6 parts by weight of the carbon black, 0.5 parts by weight of the polyethylene glycol, and 0.05 parts by weigh of the talc as a cell nucleating agent. Using a twin screw extruder [TEM26-SX, manufactured by TOSHIBA MACHINE CO., LTD.], the dry blended resin composition was melted and kneaded at a resin temperature of 220°C. The extruded strands were water-cooled in a water bath with a length of 2 m. Subsequently, the strands were cut to produce polypropylene-based resin particles (1.2 mg/grain).

[Production of polypropylene-based resin expanded particles]

A pressure resistant autoclave with a capacity of 10 L was charged with 100 parts by weight (2.4 kg) of the polypropylene-based resin particles thus produced, 200 parts by weight of water, 0.5 parts by weight of tricalcium phosphate [manufactured by TAIHEI CHEMICAL INDUSTRIAL CO., LTD.] as a dispersing agent (poorly water soluble inorganic compound), and 0.03 parts by weight of sodium alkyl sulfonate (sodium n-paraffin sulfonate) [LATEMUL PS, manufactured by Kao Corporation] as a dispersing aid (surfactant). Then, 5 parts by weight of carbon dioxide as an expanding agent was added to the autoclave while stirring. The contents of the autoclave were heated until the temperature reached the expanding temperature shown in Table 1. Subsequently, additional carbon dioxide was injected so that the internal pressure of the autoclave was raised to the expanding pressure shown in Table 1. After the autoclave was maintained at the above expanding temperature and expanding pressure for 30 minutes, the valve under the autoclave was opened to release the contents of the autoclave (i.e., the aqueous dispersion containing the polypropylene-based resin particles that had been impregnated with the expanding agent) through an orifice (single opening) with a diameter of 3.6 mm into the atmosphere at an ambient temperature of 95°C. Thus, polypropylene-based resin expanded particles with an expansion ratio of about 20 times were produced. The DSC ratio and average cell diameter of the polypropylene-based resin expanded particles were measured. Table 1 shows the results.

[Production of polypropylene-based in-mold foam molded article 1]

The polypropylene-based resin expanded particles thus produced were washed with a hydrochloric acid solution having a pH of 1 for 30 seconds, and then washed with water for 30 seconds. Subsequently, the polypropylene-based resin expanded particles were dried at 75°C. The washed polypropylene-based resin expanded particles were placed in a pressure vessel and impregnated with pressurized air, so that the internal pressure of the expanded particles was adjusted to 0.20 MPa (absolute pressure). Next, the polypropylene-based resin expanded particles with internal pressure of 0.20 MPa (absolute pressure) were filled into a mold of 300 mm (length) × 400 mm (width) × 20 mm (thickness) under the condition that the expanded particles were not compressed in the thickness direction, specifically the cracking amount was 0 mm (i.e., the mold was completely closed) so as to make the filled state worse. The inside of the mold chamber was preheated by steam for 10 seconds. Thereafter, the exhaust valve was closed and the inside of the mold chamber was heated by steam for 12 seconds (main heating process). Accordingly, the expanded particles were further expanded and fused together. The set pressure (vapor pressure) in the main heating process was 0.27 MPa (gage pressure). The mold was maintained at the set pressure for 6 seconds of the heating time of 12 seconds. Subsequently, the steam was discharged, and the inside of the mold and the surface of the molded article were water-cooled. Then, the molded article was taken out of the mold. Thus, a polypropylene-based resin in-mold foam molded article was produced. The polypropylene-based resin in-mold foam molded article was allowed to stand still at 23°C for 2 hours, cured at 75°C for 16 hours, and further allowed to stand still in a room at 23°C for 4 hours. Then, the interparticle gap and deformation of the resulting polypropylene-based resin in-mold foam molded article were evaluated. Table 1 shows the results.

[Production of polypropylene-based resin in-mold foam molded article 2]

The polypropylene-based resin expanded particles thus produced were washed with a hydrochloric acid solution having a pH of 1 for 30 seconds, and then washed with water for 30 seconds. Subsequently, the polypropylene-based resin expanded particles were dried at 75°C. The washed polypropylene-based resin expanded particles were placed in a pressure vessel and impregnated with pressurized air, so that the internal pressure of the expanded particles was adjusted to 0.20 MPa (absolute pressure). Next, the polypropylene-based resin expanded particles with internal pressure of 0.20 MPa (absolute pressure) were filled into a mold of 300 mm (length) × 400 mm (width) × 20 mm (thickness) under the condition that the cracking amount was 2 mm (i.e., the mold was opened 2 mm). Then, the mold was completely closed and the expanded particles were compressed by 10%. The inside of the mold chamber was preheated by steam for 10 seconds. Thereafter, the exhaust valve was closed and the inside of the mold chamber was heated by steam for 12 seconds (main heating process). Accordingly, the expanded particles were further expanded and fused together. The set pressure (vapor pressure) in the main heating process was 0.27 MPa (gage pressure). The mold was maintained at the set pressure for 6 seconds of the heating time of 12 seconds. Subsequently, the steam was discharged, and the inside of the mold and the surface of the molded article were water-cooled. Then, the molded article was taken out of the mold. Thus, a polypropylene-based resin in-mold foam molded article was produced. The polypropylene-based resin in-mold foam molded article was allowed to stand still at 23°C for 2 hours, cured at 75°C for 16 hours, and further allowed to stand still in a room at 23°C for 4 hours. Then, the interparticle gap and deformation of the resulting polypropylene-based resin in-mold foam molded article were evaluated. Table 1 shows the results.

(Examples 2 to 9, Comparative Examples 1 to 5)

Polypropylene-based resin particles, polypropylene-based resin expanded particles, and a polypropylene-based resin in-mold foam molded article were produced in the same manner as Example 1 except that the types and amounts of the polypropylene-based resin (A), the polypropylene-based wax (B), and the additives in the [production of polypropylene-based resin particles] were changed as shown in Table 1, and the expanding temperature and the expanding pressure in the first-step expansion process of the [production of polypropylene-based resin expanded particles] were changed as shown in Table 1. The polypropylene-based resin particles, the polypropylene-based expanded particles, and the polypropylene-based resin in-mold foam molded article thus produced were evaluated. Table 1 shows the results.

[TABLE 1]

| | | | Ex. 1 | Ex. 2 | Ex. 3 | Ex. 4 | Ex. 5 1 | Ex. 6 | Ex. 7 | Ex. 8 | Ex. 9 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|---|---|---|
| Resin particles | Polypropylene-based resin (A) | Type | (A-1) | (A-1) | (A-1) | (A-1) | (A-2) | (A-1) | (A-1) | (A-1) | (A-3) | (A-1) | (A-1) | (A-1) | (A-1) | (A-1) |
| | | Parts by weight | 97 | 95 | 98 | 97 | 97 | 97 | 97 | 97 | 97 | 100 | 97 | 97 | 99 | 90 |
| | Polyprolene-based wax (B) | Type | (B-1) | (B-1) | (B-1) | (B-2) | (B-1) | (B-1) | (B-1) | (B-1) | (B-1) | - | (B-3) | (B-4) | (B-1) | (B-1) |
| | | Parts by weight | 3 | 5 | 2 | 3 | 3 | 3 | 3 | 3 | 3 | - | 3 | 3 | 1 | 10 |
| | Carbon black | Parts by weight | 6 | 6 | 6 | 6 | 6 | 6 | 6 | 0 | 6 | 6 | 6 | 6 | 6 | 6 |
| | Polyethylene glycol | Parts by weight | 0.5 | 0.5 | 0.5 | 0.5 | 0.5 | 1 | 0 | 0.5 | 0.5 | 0.5 | 0.5 | 0.5 | 0.5 | 0.5 |
| | Glycerin | Parts by weight | 0 | 0 | 0 | 0 | 0 | 0 | 0.2 | 0 | 0 | 0 | 0 | 0 | 0 | 0 |
| | Talc | Parts by weight | 0.05 | 0.05 | 0.05 | 0.05 | 0.05 | 0.05 | 0.05 | 0.05 | 0.05 | 0.05 | 0.05 | 0.05 | 0.05 | 0.05 |
| Expanded particles | Expanding temperature | °C | 150.9 | 150.9 | 150.9 | 150.9 | 155.7 | 151.4 | 151.2 | 150.8 | 140.6 | 151.0 | 150.9 | 151.0 | 151.0 | 150.4 |
| | Expanding pressure | MPa-G | 3.3 | 3.2 | 3.3 | 3.3 | 3.1 | 3.0 | 3.2 | 3.3 | 3.5 | 3.3 | 3.3 | 3.3 | 3.3 | 2.9 |
| | Average cell diameter | μm | 196 | 203 | 190 | 185 | 221 | 251 | 221 | 215 | 188 | 198 | 190 | 196 | 194 | 245 |
| | DSC ratio | % | 21.2 | 20.9 | 20.7 | 21.3 | 19.0 | 20.8 | 22.1 | 20.8 | 23.8 | 20.5 | 19.6 | 21.8 | 21.4 | 23.1 |
| In-mold foam molded article 1 | Interparticle gap | - | 5 | 5 | 4 | 4 | 5 | 5 | 5 | 5 | 4 | 3 | 3 | 2 | 3 | 5 |
| | Deformation | - | better | better | better | better | better | better | better | better | slightly better | better | better | better | better | worse |
| In-mold foam molded article 2 | Interparticle gap | - | 5 | 5 | 5 | 5 | 5 | 5 | 5 | 5 | 5 | 4 | 5 | 4 | 4 | 5 |
| | Deformation | - | better | better | better | better | better | better | better | better | slightly better | better | better | better | better | slightly better |

As is evident from the data of Examples 1 to 9, the in-mold foam molded articles obtained by using the polypropylene-based resin expanded particles of the present invention had a small number of interparticle gaps, no deformation, and better appearance not only in the case of the [production of polypropylene-based resin in-mold foam molded article 2] where the expanded particles were compressed and filled, but also in the case of the [production of polypropylene-based resin in-mold foam molded article 1] where the expanded particles were filled without being compressed in the thickness direction so as to make the filled state worse. Moreover, comparing Example 1 and Example 9 shows that the in-mold foam molded article obtained by using the polypropylene-based resin (A) with a melting point of 140°C or more had a smaller number of interparticle gaps, no deformation, and better appearance in the case of the [production of polypropylene-based resin in-mold foam molded article 1] where the expanded particles were filled without being compressed in the thickness direction so as to make the filled state worse.

On the other hand, Comparative Example 1, in which the polypropylene-based resin (A) alone was used as a base resin, was inferior in the interparticle gap to Examples, in which the resin mixture containing the polypropylene-based resin (A) and the polypropylene-based wax (B) was used as a base resin. When the polypropylene-based wax with a melting point of more than 100°C was used, as shown in Comparative Examples 2 and 3, the interparticle gap of the in-mold foam molded article was not improved in the case of the [production of polypropylene-based resin in-mold foam molded article 1] where the expanded particles were filled without being compressed in the thickness direction so as to make the filled state worse, and then in-mold foam molding was performed. Moreover, when the amount of the polypropylene-based wax (B) was less than 1.5% by weight, as shown in Comparative Example 4, the effect of improving the interparticle gap was not achieved. When the amount of the polypropylene-based wax (B) was more than 8.0% by mass, as shown in Comparative Example 5, although the interparticle gap was good, the in-mold foam molded article was greatly deformed and was not able to have better appearance as a whole.

## Claims

1. Polypropylene-based resin expanded particles comprising polypropylene-based resin particles that contain a polypropylene-based resin mixture as a base resin,
   wherein the polypropylene-based resin mixture consists of 92.0 parts by weight or more and 98.5 parts by weight or less of a polypropylene-based resin with a melting point of 130°C or more and 155°C or less and 1.5 parts by weight or more and 8.0 parts by weight or less of a polypropylene-based wax with a melting point of 100°C or less when a weight of the polypropylene-based resin mixture is 100 parts by weight, and
   the polypropylene-based wax is a copolymer of propylene and $\alpha$-olefin other than propylene.

2. The polypropylene-based resin expanded particles according to claim 1, wherein the polypropylene-based wax is obtained by polymerization using a metallocene catalyst.

3. The polypropylene-based resin expanded particles according to claim 1 or 2, wherein the polypropylene-based resin particles contain 0.01 parts by weight or more and 10 parts by weight or less of a hydrophilic compound with respect to 100 parts by weight of the polypropylene-based resin mixture.

4. The polypropylene-based resin expanded particles according to any one of claims 1 to 3, wherein the polypropylene-based resin particles contain a colorant, and a content of the colorant is 0.01 parts by weight or more and 15 parts by weight or less with respect to 100 parts by weight of the polypropylene-based resin mixture.

5. The polypropylene-based resin expanded particles according to any one of claims 1 to 4, wherein the polypropylene-based resin particles contain a colorant, and the colorant is carbon black.

6. The polypropylene-based resin expanded particles according to any one of claims 1 to 5, wherein the polypropylene-based resin particles contain a colorant, the colorant is carbon black, and a content of the carbon black is 0.1 parts by weight or more and 10 parts by weight or less with respect to 100 parts by weight of the polypropylene-based resin mixture.

7. A polypropylene-based resin in-mold foam molded article comprising the polypropylene-based resin expanded particles according to any one of claims 1 to 6.

8. A method for producing the polypropylene-based resin expanded particles according to any one of claims 1 to 6, the method comprising a first-step expansion process to produce polypropylene-based resin expanded particles, the first-step expansion process including:

dispersing polypropylene-based resin particles, an expanding agent, and an aqueous dispersing medium in a sealed container;

heating an aqueous dispersion thus prepared to a temperature not less than a softening temperature of the polypropylene-based resin particles and applying pressure to the aqueous dispersion; and then

releasing the aqueous dispersion in the sealed container to a pressure region where pressure is lower than internal pressure of the sealed container.

9. The method according to claim 8, wherein the expanding agent is inorganic gas and/or water.

10. The method according to claim 9, wherein the inorganic gas is carbon dioxide.

11. A method for producing a polypropylene -based resin in-mold foam molded article, the method comprising:

filling the polypropylene-based resin expanded particles according to any one of claims 1 to 6 into a molding space that is defined by two molds and can be closed but not hermetically sealed, after applying pressure not less than atmospheric pressure to an inside of the polypropylene-based resin expanded particles; and

heating the polypropylene-based resin expanded particles by a heating medium to form a polypropylene-based resin in-mold foam molded article.

**Patentansprüche**

1. Expandierte Harzteilchen auf Polypropylenbasis, umfassend Harzteilchen auf Polypropylenbasis, welche ein Harzgemisch auf Polypropylenbasis als ein Grundharz enthalten,

wobei das Harzgemisch auf Polypropylenbasis aus 92,0 Gewichtsteilen oder mehr und 98,5 Gewichtsteilen oder weniger eines Harzes auf Polypropylenbasis mit einem Schmelzpunkt von 130°C oder mehr und 155°C oder weniger und 1,5 Gewichtsteilen oder mehr und 8,0 Gewichtsteilen oder weniger eines Wachses auf Polypropylenbasis mit einem Schmelzpunkt von 100°C oder weniger besteht, wenn ein Gewicht des Harzgemisches auf Polypropylenbasis 100 Gewichtsteile beträgt, und

das Wachs auf Polypropylenbasis ein Copolymer von Propylen und einem von Propylen verschiedenen $\alpha$-Olefin ist.

2. Die expandierten Harzteilchen auf Polypropylenbasis gemäß Anspruch 1, wobei das Wachs auf Polypropylenbasis durch Polymerisation unter Verwendung eines Metallocenkatalysators erhalten wird.

3. Die expandierten Harzteilchen auf Polypropylenbasis gemäß Anspruch 1 oder 2, wobei die Harzteilchen auf Polypropylenbasis 0,01 Gewichtsteile oder mehr und 10 Gewichtsteile oder weniger einer hydrophilen Verbindung enthalten, bezogen auf 100 Gewichtsteile des Harzgemischs auf Polypropylenbasis.

4. Die expandierten Harzteilchen auf Polypropylenbasis gemäß einem der Ansprüche 1 bis 3, wobei die Harzteilchen auf Polypropylenbasis ein Farbmittel enthalten und ein Anteil des Farbmittels 0,01 Gewichtsteile oder mehr und 15 Gewichtsteile oder weniger beträgt, bezogen auf 100 Gewichtsteile des Harzgemischs auf Polypropylenbasis.

5. Die expandierten Harzteilchen auf Polypropylenbasis gemäß einem der Ansprüche 1 bis 4, wobei die Harzteilchen auf Polypropylenbasis ein Farbmittel enthalten und das Farbmittel Carbon-Black ist.

6. Die expandierten Harzteilchen auf Polypropylenbasis gemäß einem der Ansprüche 1 bis 5, wobei die Harzteilchen auf Polypropylenbasis ein Farbmittel enthalten, das Farbmittel Carbon-Black ist und ein Anteil des Carbon-Black 0,1 Gewichtsteile oder mehr und 10 Gewichtsteile oder weniger beträgt, bezogen auf 100 Gewichtsteile des Harzgemischs auf Polypropylenbasis.

7. Ein in der Form geschäumter Formkörper auf Polypropylenharzbasis, umfassend die expandierten Harzteilchen auf Polypropylenbasis gemäß einem der Ansprüche 1 bis 6.

8. Ein Verfahren zur Herstellung der expandierten Harzteilchen auf Polypropylenbasis gemäß einem der Ansprüche 1 bis 6,

wobei das Verfahren ein Expansionsverfahren mit einer ersten Stufe umfasst, um expandierte Harzteilchen auf Polypropylenbasis herzustellen, wobei das Expansionsverfahren mit einer ersten Stufe umfasst:

Dispergieren von Harzteilchen auf Polypropylenbasis, einem Treibmittel und einem wässrigen Dispersionsmedium in einem dicht verschlossenen Behälter;

Erwärmen einer derart hergestellten wässrigen Dispersion auf eine Temperatur von nicht niedriger als einer Erweichungstemperatur der Harzteilchen auf Polypropylenbasis und Anwenden von Druck auf die wässrige Dispersion; und dann

Freisetzen der wässrigen Dispersion in dem dicht verschlossenen Behälter in einen Druckbereich, in welchem der Druck niedriger als der innere Druck des dicht verschlossenen Behälters ist.

9. Das Verfahren gemäß Anspruch 8, wobei das Treibmittel anorganisches Gas und/oder Wasser ist.

10. Das Verfahren gemäß Anspruch 9, wobei das anorganische Gas Kohlendioxid ist.

11. Ein Verfahren zur Herstellung eines in der Form geschäumten Formkörpers auf Polypropylenharzbasis, wobei das Verfahren umfasst:

Füllen der expandierten Harzteilchen auf Polypropylenbasis gemäß einem der Ansprüche 1 bis 6 in einen Formraum, welcher durch zwei Formen definiert ist und geschlossen, aber nicht hermetisch verschlossen werden kann, nachdem Druck von nicht weniger als Atmosphärendruck auf eine Innenseite der expandierten Harzteilchen auf Polypropylenbasis ausgeübt wurde; und

Erwärmen der expandierten Harzteilchen auf Polypropylenbasis durch ein Wärmemedium, um einen in der Form geschäumten Formkörper auf Polypropylenharzbasis zu bilden.

## Revendications

1. Particules expansées en résine à base de polypropylène comprenant des particules en résine à base de polypropylène qui contiennent un mélange de résine à base de polypropylène en tant que résine de base,
dans lesquelles le mélange de résine à base de polypropylène est constitué de 92,0 parties en poids ou plus et 98,5 parties en poids ou moins d'une résine à base de polypropylène ayant un point de fusion de 130 °C ou plus et de 155 °C ou moins, et 1,5 parties en poids ou plus et 8,0 parties en poids ou moins d'une cire à base de polypropylène ayant un point de fusion de 100 °C ou moins, quand le poids du mélange de résine à base de polypropylène est de 100 parties en poids, et
la cire à base de polypropylène est un copolymère de propylène et d'une $\alpha$-oléfine autre que le propylène.

2. Particules expansées en résine à base de polypropylène selon la revendication 1, dans lesquelles la cire à base de polypropylène est obtenue par polymérisation utilisant un catalyseur métallocène.

3. Particules expansées en résine à base de polypropylène selon la revendication 1 ou 2, dans lesquelles les particules en résine à base de polypropylène contiennent 0,01 partie en poids ou plus et 10 parties en poids ou moins d'un composé hydrophile pour 100 parties en poids du mélange de résine à base de polypropylène.

4. Particules expansées en résine à base de polypropylène selon l'une quelconque des revendications 1 à 3, dans lesquelles les particules en résine à base de polypropylène contiennent un colorant, et la teneur en le colorant est de 0,01 partie en poids ou plus et de 15 parties en poids ou moins pour 100 parties en poids du mélange de résine à base de polypropylène.

5. Particules expansées en résine à base de polypropylène selon l'une quelconque des revendications 1 à 4, dans lesquelles les particules en résine à base de polypropylène contiennent un colorant, et le colorant est un noir de carbone.

6. Particules expansées en résine à base de polypropylène selon l'une quelconque des revendications 1 à 5, dans lesquelles les particules en résine à base de polypropylène contiennent le colorant, le colorant est un noir de carbone, et la teneur en le noir de carbone est de 0,1 partie en poids ou plus et de 10 parties en poids ou moins pour 100 parties en poids du mélange de résine à base de polypropylène.

7. Article moulé en mousse, en résine à base de polypropylène, comprenant les particules expansées en résine à base de polypropylène de l'une quelconque des revendications 1 à 6.

**8.** Méthode pour produire les particules expansées en résine à base de polypropylène de l'une quelconque des revendications 1 à 6,

la méthode comprenant une première étape de procédé d'expansion pour produire des particules expansées en résine à base de polypropylène, la première étape de procédé d'expansion comprenant :

la dispersion de particules en résine à base de polypropylène, d'un agent d'expansion, et d'un milieu dispersant aqueux dans un récipient scellé ;

le chauffage de la dispersion aqueuse ainsi préparée à une température non inférieure au point de ramollissement des particules en résine à base de polypropylène et l'application d'une pression à la dispersion aqueuse ; et ensuite

le relâchement de la dispersion aqueuse dans le récipient scellé vers une zone de pression dans laquelle la pression est inférieure à la pression interne du récipient scellé.

**9.** Méthode selon la revendication 8, dans laquelle l'agent d'expansion est un gaz inorganique et/ou l'eau.

**10.** Méthode selon la revendication 9, dans laquelle le gaz inorganique est le dioxyde de carbone.

**11.** Méthode pour produire un article moulé en mousse, en résine à base de polypropylène, la méthode comprenant :

le remplissage, par des particules expansées en résine à base de polypropylène de l'une quelconque des revendications 1 à 6, d'un espace de moulage qui est défini par deux moules et qui peut être fermé mais pas scellé hermétiquement, après l'application d'une pression non inférieure à la pression atmosphérique à l'intérieur des particules expansées en résine à base de polypropylène ; et

le chauffage des particules expansées en résine à base de polypropylène au moyen d'un milieu chauffant pour former un article moulé en mousse, en résine à base de polypropylène.

FIG. 1

**REFERENCES CITED IN THE DESCRIPTION**

**Patent documents cited in the description**

- JP 2009084547 A
- JP 2005008850 A
- JP H3199186737 A
- JP 2008088340 A
- JP 2013209494 A
- JP H31991197516 A
- WO 0232985 A1